# EUROPEAN PATENT APPLICATION

(11) **EP 2 104 020 A1**
(43) Date of publication of application: **23.09.2009**
(21) Application number: 08251014.0
(22) Date of filing: 20.03.2008
(51) Int. Cl.: G06F 3/02

(54) **A device**

(71) Applicant: British Telecommunications public limited company, 81 Newgate Street London EC1A 7AJ (GB)
(72) Inventor: The designation of the inventor has not yet been filed
(74) Representative: Chabasseur, Vincent Robert

(57) **Abstract**

The present invention relates to a user device, in particular a user device plurality of depressable user input keys, each with a display for displaying a character or other symbol. The device is arranged to sense which orientation the device is being held in. The respective symbols displayed on each key are assigned dynamically in response to changes in orientation. This is done such that the layout of the key symbols (and corresponding functions) remains unchanged with reference to the absolute (gravitational) direction when the device is rotated from one orientation to another orientation. This allows a user who has developed a knowledge of the relative positions of the key functions in one orientation to use that knowledge in order to quickly and to date when the device is in another orientation.

## Description

The present invention relates to a user device, in particular a user device having depressable keys.

A conventional keyboard or keypad normally has a plurality of depressable keys, that is, keys or button which can move towards an underlying backing layer in response to finger pressure. The letters to which keys correspond often laid out in a standardised fashion. One such standardised layout used for English text is the so-called QWERTY layout, although other layouts are known for the input of text in other languages. One advantage of a standardised layout is that a user can become accustomed to the relative positions of the letters, thereby reducing the need for the user to repeatedly search for letters on the keyboard. However, such keyboards can be difficult to use if the orientation of the keyboard relative to the user is changed.

According to the present invention, there is provided a portable user device having: a plurality of depressable user input keys, each key having associated therewith a display for displaying, in a controllable fashion, a symbol assigned to that key; a controller for controlling the assignment of symbols displayed in relation to the respective keys; and, an orientation sensor for providing an orientation signal indicative of which of a first orientation and a second orientation the device is in, the controller being operable to change the assignment of the respective symbols in response to the orientation signal such that when the orientation of the device is changed from the first orientation to the second orientation, the spatial relationship between the symbols with reference to the first orientation is maintained.

The term "spatial relationship" is intended to refer to the position of a given symbol with respect to the position of the other symbols. Because the spatial relationship between the symbols relative to the first orientation is maintained in the second orientation, a user is able to enter data or commands more easily than would be the case were the spatial relationship to be maintained in the frame of reference of the device itself. This reduces the need for a user to visually search for the symbols on the keys when the orientation of the device is changed. A symbol may be an image, for example an image containing at least one letter, numeral, or other character. Alternatively, a symbol may be of uniform colour.

In order to make it easier for a user to read the symbols, each symbol preferably has an individual orientation associated therewith, the controller being operable to change the individual orientation of each symbol when the orientation of the device is changed from the first orientation to the second orientation.

Preferably, the controller is operable to change the function of each key when the orientation of the device changes, so as to maintain an association between each given symbol and its associated function. As a result, a user will be able to better predict the consequence of pressing a given key. However, such dynamic function assignment need not be solely performed in response to changes in orientation, and may be preformed in response to user input instructions. Examples of functions include the input of commands such as those which alter one or more aspects of the operation of the device, and are not limited to the input of a given character or the displaying that character on a display.

The keys may be arranged in an array that is symmetric upon rotation from the first orientation to the second orientation. Preferably, the first and second orientations are normal to one another, the array being a square or rectangular array having an equal number of rows and columns. Because of the symmetric positioning of the keys on the device, a key in the second orientation can be provided for each symbol displayed when the device is in the first orientation. Clearly, some keys, such as a power on/off key, may be provided whose symbols are not assigned dynamically.

In a preferred embodiment, and each key has a movable portion, the movable portion of a given key having a display mounted thereon such that when a key is depressed, the display of that key is caused to move with the movable portion. A restoring force is preferably provided by a resilient member. The resilient member may be arranged to restore the movable portion to its original position when a key is released after being depressed. Alternatively or in addition, the resilient member may be arranged to provide tactile feedback to a user, allowing a user to better judge when a character or command has been properly entered.

The portable user device will preferably be a communications device such as a PDA or other mobile telephony apparatus which may or may not have additional functions, such as a camera function. However, the device need not be suitable for telecommunications, and instead may be simply a camera or other device into which the data or other functions can be entered.

According to a further aspect of the present invention, there is provided a method of operating a device having a plurality of depressable user input keys, each key having a display for displaying a symbol indicative of a function assigned thereto, the symbols having a spatial relationship associated therewith in a first orientation, including: in response to a change in the orientation of the device from the first orientation to a second orientation, changing the symbols displayed by the keys such that the spatial relationship between the symbols relative to the first orientation is maintained in the second orientation.

According to a yet further aspect of the present invention, there is provided a user device having: a plurality of depressable user input keys, each key having a function assigned thereto according to a spatial layout; a controller for controlling the assignment of functions assigned to the respective keys; and, an orientation sensor for providing an orientation signal indicative of which of a first and second orientation of the device is in, the controller being operable to change the assignment of the respective functions in response to the orientation signal such that when the orientation of the device is changed from the first orientation to the second orientation, the a spatial layout relative to the first orientation is maintained in the second orientation.

The invention will now be further described by way of example only and with reference to the following drawings in which:
Figure 1 shows a communications device according to the present invention;
Figure 2 is a simplified representation of the device in a first orientation;
Figure 3 is a simplified representation of the device of Figure 2 in a second orientation;
Figure 4 is a functional representation of the device of Figure 1;
Figure 5 is a cross-sectional schematic view of a key;
Figure 6 shows a view of a communications device in a first orientation and in first operational mode;
Figure 7 shows the device of Figure 7 in a second orientation;
Figure 8 shows the device of Figures 6 and 7 but in a second operational mode; and,
Figure 9 shows the device of Figure 6 and 7 in a third operational mode.

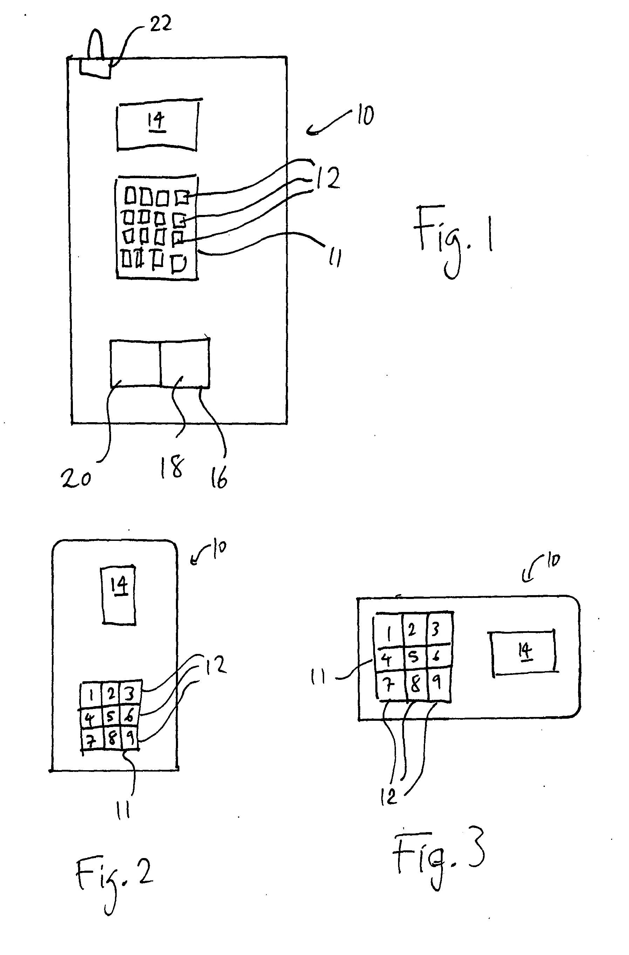

Figure 1 shows a hand held communications device 10 having a keyboard 11 a with a plurality of depressable keys 12, also know as buttons, which a user can press in order to enter information or commands into the communications device 10. Each key has a respective symbol or other image displayed thereon indicative of the function or functions of the key, so that a user can know which key to press in order to input the required information or command. A main display 14, such as an LCD display, is provided for displaying information for the user to view. An audio interface 16 having a microphone 18 and a speaker 20 is provided to allow the user to respectively enter and hear audio information. An antenna module 22 allows the communications device to transmit and receive data to and from an external network (not shown), in the normal way of other known hand held communications devices. The communications device 10 is dimensioned so that it can conveniently be hand held by a user in one of a plurality of orientations. For example, the communications device can be held in a vertical orientation, as shown in figure 1, or in a horizontal orientation, in which the device is rotated by 90° with respect to the orientation in figure 1.

The communications device 10 is arranged to sense which of a plurality of orthogonal orientations the device is being held in. In summary, the respective symbols displayed on each key are assigned dynamically in response to changes in orientation. This is done such that the layout of the key symbols (and corresponding functions) remains unchanged with reference to an absolute (gravitational) direction when the device is rotated from one orientation to another orientation. Instead the layout of the key symbols is rotated relative to the reference frame of the device itself. However, the respective function to which each symbol corresponds is generally kept the same. This allows a user who has developed a knowledge of the relative positions of the key functions in one orientation to use that knowledge in order to quickly enter data when the device is in another orientation. Each of the key symbols also rotates by the required amount, to allow the key symbols to be read easily in the different orientations.

This aspect of device operation is illustrated in figures 2 and 3, which respectively show, in simplified form, the device 10 in the vertical and the horizontal positions. A simplified keyboard 11 is shown having only nine keys, arranged as a three rows and three columns. In an figure 2, the keys 12 displaying the symbols 1, 2, 3 lie on the upper row. In the absence of dynamic key assignment, rotation of the device through 90° would lead to a situation in which what would be the upper row (in the new orientation) would have keys 3, 6, 9. However, the effect of dynamic key assignment is to maintain the relative positions of the key symbols in the absolute frame of reference, that is, with respect to the gravitational direction. After rotation, the keys in figure 2 showing for example symbols 1, 2, 3 remain on the upper row, directly above those numbered 4, 5, 6. The function associated with each symbol is maintained, so that a user wishing to enter the number 19 will know to press the key at the top left of the keyboard, followed by the key at the bottom right of the keyboard (that is, three rows left and three columns down), without needing to search for the new key positions on the keyboard.

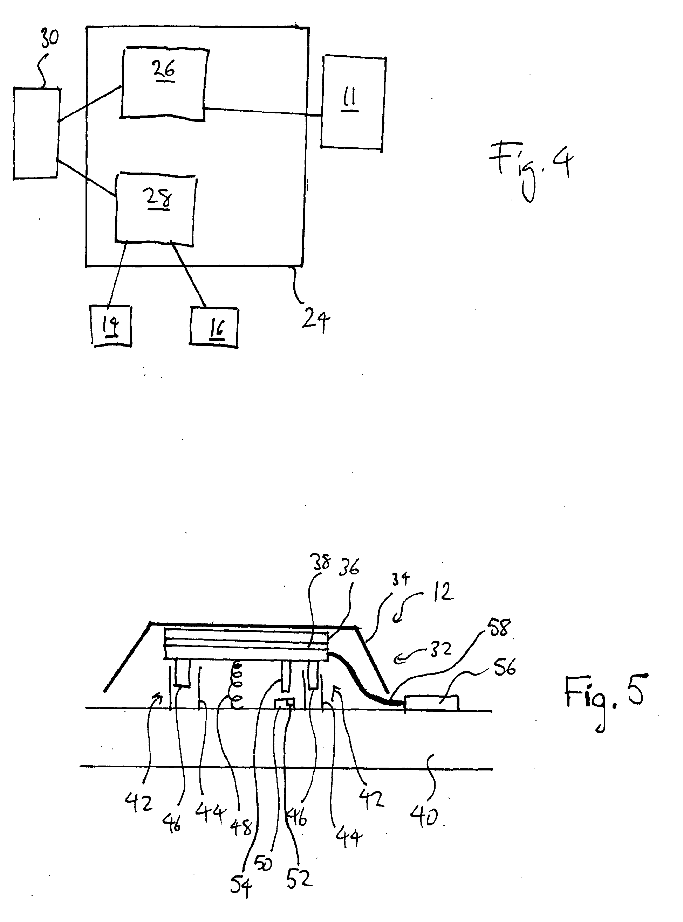

The communications device of figure 1 is represented in functional form in figure 4 (components corresponding to those of figure 1 are given corresponding numerals). The device is controlled by a device controller 24, implemented as a processor circuit (not shown) having a memory for storing executable instructions and other data, and at least one processor for executing the stored instructions. The device controller can be represented as including a key control stage 26 and an operational control stage 28, each of which is implemented as a respective program logic module within the processor circuit.

Coupled to both the key control stage 26 and the operational control stage 28 is an orientation sensor 30, which generates orientation signals indicative of the orientation of the communication device, with respect to the gravitational direction. In the present embodiment, the orientation sensor 30 provides an indication of which one of four orthogonal directions the orientation of the device is closest to; that is, whether the device is oriented closest to 0° (vertical), 90° (sideways), 180° (vertical inverted), or 270° (sideways). The orientation sensor 30 is arranged to generate an orientation signal each time a change from one of the four orientations to another of the four orientations is detected. The orientation sensor 30 also generates an orientation signal on startup, to indicate the initial orientation of the device (clearly, the device need not always reside in a vertical plane, and each orientation above refers to a component of an actual orientation projected onto a vertical plane).

The operational control stage 28 is coupled to the orientation sensor as well as various other functional units of the communications device 10 such as the audio interface 16 a and the display 14. The operational control stage 28 is arranged to control the operation of the functional units in response to command signals from the key control stage 26. Examples of commands include an instruction to show a given character on the display, an instruction to change the volume of sound generated by the audio interface, and instructions for the antenna module 22 to transmit data corresponding to a requested telephone number. In particular, the operational control stage is responsive to the orientation signals so as to control the orientation of images displayed on the display such that the images correspond to the orientation indicated by the orientation signals.

The key control stage 26 is coupled to the keyboard 11 so as to govern the respective symbols displayed by the keys 12. In particular, the key control stage is arranged to dynamically assign symbols to the respective keys in dependence on the orientation signals received from the orientation sensor 30 and to translate key input actions (i.e. the depression of keys) into command signals for the operational control stage, as explained in more detail further below.

Figure 5 is a cross sectional view of one of the keys 12 of the keyboard 11. The key 12 has a movable portion 32 including a cover 34 formed from a transparent plastics material. Mounted on an underside surface of the cover is a key display unit to 36 for displaying an image that is visible to a user through the key cover 34. The display has a plurality of layers, including an emissive layer 38 formed for example from an organic light emitting diode material. The movable portion is mounted on planar circuit board 40 by a plurality of piston mechanisms 42, which allow movement of the movable portion, in particular the key cover thereof, in a direction normal to the plane of the circuit board; that is, up and down in the orientation of figure 5. Each piston mechanism 42 has a cylinder portion 44 fixedly mounted on the circuit board 40, within which cylinder portion there is slidingly engaged a plunger portion 46. The plunger portion 46 is affixed to an underside 47 of the key display unit 36. A resilient member 48 extends between the key display unit 36 and the circuit board 40, so as to return the movable portion 32 to its original position after it has been depressed, and also to provide tactile feedback to a user. An elastomeric material may be used to provide the feedback.

In order to sense when a key is depressed by a user, a sensor circuit 50 is provided, The sensor circuit includes a contact sensor 52 for sensing when a downward extending member 54 mounted on the underside 47 of the key display unit makes contact with the contact sensor 52. When contact is made, the sensor circuit 50 is arranged to transmit a sensor signal along the circuit board 40, which signal contains a permanently assigned key identifier or key ID for that key. Each key has a different ID, which for example is based on the coordinate position of that key on the keyboard. Each key has a respective driver circuit 56 for driving the display unit thereof, the driver circuit being provided on the circuit board 40 in a proximate to position to the key display unit it is arranged to drive. A flexible electrical ribbon cable 58 connects each key display unit 36 to its associated driver circuit 56. The driver circuit is 56 for the respective keys are each arranged to receive key display signals from the key control stage 26, the key display signals each containing an indication of the key ID and an indication of the symbol to be displayed by that key. Each driver circuit 56 has stored therein the key ID for its respective key, and is responsive to key display signals with a matching ID so as to cause the key display unit to display the required image. In this way, the key control stage 26 can individually addressed each key of the keyboard in order to govern which symbol is displayed thereon.

The key control stage 26 has a memory location in which there is stored a plurality of lookup tables, each table corresponding to a respective one of the four orthogonal orientations. In a given table, there is mapped each key ID to both a respective command and a symbol indicative of the command. The key control stage 26 is configured to selectively retrieve a table each time an orientation signal is received from the orientation sensor 30, the retrieved table being selected to correspond to the orientation indicated by the orientation signal. The retrieved table thus corresponds to the current orientation of the communications device 10.

Upon retrieving a table, the key controller 26 is arranged to transmit key display signals to the keyboard 11 such that each key with a given ID is able to display the symbol indicated in the table for that ID. In response to receiving a sensor signal containing a given ID from the keyboard 11, the key controller looks up the command corresponding to that ID in the currently retrieved table, and passes that command to the operation control stage 28. In this way, the keys on the keyboard each display a symbol corresponding to the current orientation, and when pressed, each key gives rise to the respective command expected from its displayed symbol.

In response to receiving a further sensor signal, the key control stage is arranged to retrieve a fresh table corresponding to the updated orientation indicated by the orientation signal, and to transmit the fresh key display signals corresponding to the symbols indicated in the newly retrieved table. Thus, when the orientation of the device changes, the symbols displayed on the keys also change. For each given table, the symbol stored in respect of each key ID is chosen such that, with respect to the orientation corresponding to that table, the layout of the key symbols is the same.

The key display signals also contain an indication of the orientation in which each individual symbol should be displayed, such that the orientation of the symbols match the orientation of the device (to within 45°, since in the present example the key control stage has tables for only four orientations).

With reference to the simplified examples shown in figures 2 and 3, and assuming each key has an ID of the form <(column number, row number)> where rows and columns are statically defined with respect to the vertical orientation of figure 2, the key with ID (1, 2) displays the numeral "2 " and, and has an associated command which causes the numeral 2 to be entered when the key is pressed. Likewise, the key with ID (3, 2) displays the numeral "6", and has the associated command of entering the numeral 6. When the orientation of the device changes to that of figure 3, key (1, 2) now shows the character "4", a such that pressing key (1, 2) now enters a numeral 4, whereas key (3, 2) now enters a "2" when pressed. In the command associated with key (2,2) is unchanged when the device is rotated, due to the rotational symmetry of the keypad under 90° rotation.

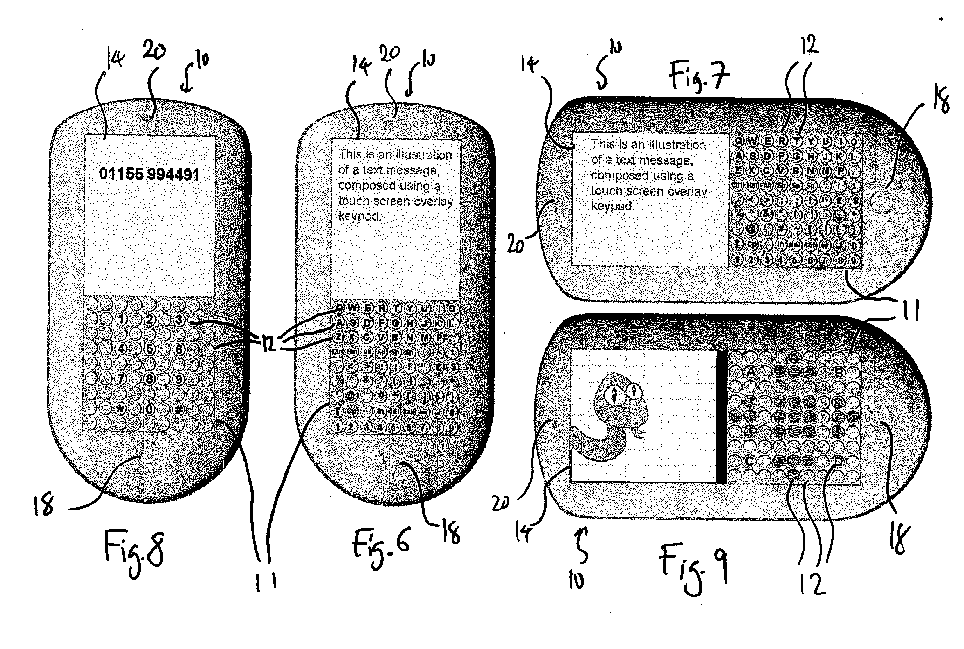

Figures 6 and 7 show a device according to an embodiment in which the keyboard has a respective letter key for entering each letter of the alphabet, and a respective number key for entering each numeral 0-9. The letter keys are arranged according to the QWERTY layout. Additional keys are provided for entering other characters, such as punctuation marks and operational commands which control one or more aspects of the device operation. Examples of operational commands include commands to change the screen mode or the audio settings of the audio interface 16. Further keys are provided which are mapped to commands that modify the actions of other keys, such as the key displaying the symbol "ctrl", which can be pressed simultaneously with other keys.

The keys are arranged as an array having first same number of columns as there are rows. Thus, the array is symmetrical, in that when the device orientation is changed from the vertical orientation of figure 6 to the horizontal orientation of figure 7, each key symbol in the vertical orientation can be accommodated in the horizontal position. That is, each row is transposed into a common upon rotation. Although in figure 6 the array is a square array, a rectangular array with an equal number of rows and columns could be used instead. Clearly, although the entire array in figure 6 is transposed upon rotation, only a subgroup could be transposed. Furthermore, an array with an unequal number of rows and columns could be used instead, although one result of this would be that not all the keys would be available in the same spatial configuration in each orientation: only a subgroup with the same number of rows and columns would keep its spatial layout of key symbols. Key sets may be provided that are arranged with other forms of symmetry. Preferably, the number of detectable orientations will match the rotational symmetry of the key set. Thus if a key set has rotational symmetry about 360°/N, the orientation sensor will be able to distinguish between N different orientations.

The device is capable of operating in different modes. In figure 8, some of the keys are inactive and show no symbol, whereas other are active and show a symbol. Keys in a central region of the keyboard display numerical symbols, inactive keys being disposed between the active keys. Such a configuration reduces the likelihood that one active key will be inadvertently depressed rather than another active key, since the active keys are spaced apart rather than neighbouring one another.

In figure 9, keys are provided at regular intervals, as in the embodiments of figures 6-8. Some keys, referred to herein as coloured keys, display a symbol consisting of a uniform colour. The coloured keys are bunched into groups, which groups are spaced apart from one another, inactive keys being disposed between the groups. Each group comprises a plurality of coloured keys adjacent to one another, the keys of a given group each having the same colour, whereas different groups have different colours to one another. The coloured keys of each group have the same action when pressed, in the present example causing a character displayed on the screen to move in a given direction. Bunching keys in this way allows a given group of keys to respond as a single, larger, button.

Clearly, the same device may be used to implement the functionality shown in figures 6-9: that is, in different operational modes of the same device can be represented by figure 6-9, symbols being assigned to the keys in accordance with the mode of operation.

## Claims

1. A portable user device having: a plurality of depressable user input keys, each key having associated therewith a display for displaying, in a controllable fashion, a symbol assigned to that key; a controller for controlling the assignment of symbols displayed in relation to the respective keys; and, an orientation sensor for providing an orientation signal indicative of which of a first orientation and a second orientation the device is in, the controller being operable to change the assignment of the respective symbols in response to the orientation signal such that when the orientation of the device is changed from the first orientation to the second orientation, the spatial relationship between the symbols with reference to the first orientation is maintained.

2. A portable user device as clamed in claim 1, wherein each symbol has an individual orientation associated therewith, the controller being operable to change the individual orientation of each symbol when the orientation of the device is changed from the first orientation to the second orientation.

3. A portable user device as clamed in claim 1 or claim 2, wherein the keys each have a function dynamically associated therewith, the controller being operable to change the function of each key when the orientation of the device changes so as to maintain an association between each symbol and a respective function.

4. A portable user device as claimed in claim 3, wherein the association between each symbol and its respective function is a static association.

5. A portable user device as clamed in any of the preceding claims, wherein the first and second orientations are normal to one another.

6. A portable user device as clamed in any of the preceding claims, wherein the keys are arranged in an array that is symmetric upon rotation from the first orientation to the second orientation.

7. A portable user device as clamed in claim 6 when dependent on claim 5, wherein the array is a square array.

8. A portable user device as clamed in any of the preceding claims, wherein each key has a movable portion, the movable portion of a given key having a display mounted thereon such that when a key is depressed, the display of that key is caused to move with the movable portion.

9. A portable user device as claimed in any of the preceding claims, wherein the display of a given key is an emissive display.

10. A portable user device as claimed in any of the preceding claims, wherein each key has a resilient member arranged to provide tactile feedback to a user.

11. A portable user device as claimed in any of the preceding claims, wherein the orientation sensor is an gravitational orientation sensor for providing an indication of orientation relative to the direction of gravity.

12. A portable user device as claimed in any of the preceding claims, wherein the portable user device is a communications device.

13. A method of operating a device having a plurality of depressable user input keys, each key having a display for displaying a symbol indicative of a function assigned thereto, the symbols having a spatial relationship associated therewith in a first orientation, including: in response to a change in the orientation of the device from the first orientation to a second orientation, changing the symbols displayed on the keys such that the spatial relationship between the symbols relative to the first orientation is maintained in the second orientation.

14. A method of operating a device as claimed in claim 13, wherein the change in orientation is sensed relative to the direction of gravity.

15. A user device having: a plurality of depressable user input keys, each key having a function assigned thereto according to a spatial layout; a controller for controlling the assignment of functions assigned to the respective keys; and, an orientation sensor for providing an orientation signal indicative of which of a first and second orientation of the device is in, the controller being operable to change the assignment of the respective functions in response to the orientation signal such that when the orientation of the device is changed from the first orientation to the second orientation, the a spatial layout relative to the first orientation is maintained in the second orientation.
